# EUROPEAN PATENT APPLICATION

(11) **EP 2 902 286 A2**
(43) Date of publication of application: **05.08.2015**
(21) Application number: 14167436.6
(22) Date of filing: 07.05.2014
(51) Int. Cl.: B60W 10/00, B60W 10/04, B60L 15/00

(54) **Control synchronization between multiple control units for resource load sharing**

(30) Priority: 30.01.2014 US 201414168925
(71) Applicant: Deere & Company, Moline, IL 61265 (US)
(72) Inventor: Sopko, Tyge Alan, Dubuque, IA 52001 (US)
(74) Representative: Robson, Aidan John

(57) **Abstract**

The present disclosure relates to a vehicle including a plurality of electric motors configured to drive a plurality of traction devices. The vehicle includes a first controller configured to control a first electric motor and a second controller configured to control a second electric motor. The first controller and the first electric motor are coupled to a first communication network, and the second controller and the second electric motor are coupled to a second communication network. The second controller includes synchronization logic operative to synchronize control of the second electric motor by the second controller with control of the first electric motor by the first controller based on a synchronization signal provided by the first controller over a communication link.

## Description

### FIELD OF THE DISCLOSURE

The present disclosure relates to an electric drive system for a vehicle, and more particularly to a system and method for synchronizing control between multiple control units of an electric drive system for resource load sharing.

### BACKGROUND

Electric vehicles, including electric-only vehicles, hybrid vehicles, and range extender vehicles, include one or more electric motors configured to drive ground engaging mechanisms of the vehicle. Electric vehicles often include a generator driven by a prime mover, such as an engine, for generating electrical power used to drive the motor of the vehicle. Some electric vehicles, such as construction vehicles, for example, include multiple electric motors powered by one or more generators, and each electric motor drives at least one ground engaging mechanism. The electronic control unit (ECU) and communication network of the vehicle may have limited processing and bandwidth capability to support multiple electric motors and generators of the vehicle. Further, vehicles often include an ECU and other hardware that are several generations behind the latest electronic technology due to reliability, packaging, and cost considerations. As such, the control systems controlling electric motors and generators of these vehicles are often subject to communication bandwidth constraints and processing power constraints.

### SUMMARY

The present disclosure provides a system and method for synchronizing control between multiple control units of an electric drive system for resource load sharing in the control of multiple electric machines.

According to an embodiment of the present disclosure, a vehicle is provided including a chassis, a plurality of traction devices configured to support the chassis, and a plurality of electric motors. Each electric motor is operative to drive a traction device. The vehicle includes a first communication network and a second communication network. The vehicle includes a first controller configured to control a first electric motor of the plurality of electric motors. The first controller and the first electric motor are coupled to the first communication network. The vehicle includes a second controller configured to control a second electric motor of the plurality of electric motors. The second controller and the second electric motor are coupled to the second communication network. The vehicle includes a communication link electrically coupled between the first controller and the second controller. The second controller includes synchronization logic operative to synchronize control of the second electric motor by the second controller with control of the first electric motor by the first controller based on a synchronization signal provided by the first controller over the communication link.

According to another embodiment of the present disclosure, an electric drive system for a vehicle is provided including a first electric drive subsystem and a second electric drive subsystem. The first electric drive subsystem includes a first power bus, a first generator, a first generator inverter operative to transfer power generated by the first generator to the first power bus, a first electric motor, a first electric motor inverter configured to transfer power from the first power bus to the first electric motor, and a first controller operative to control at least one of the first electric motor inverter and the first generator inverter via a first communication network. The second electric drive subsystem includes a second power bus, a second generator, a second generator inverter operative to transfer power generated by the second generator to the second power bus, a second electric motor, a second electric motor inverter configured to transfer power from the second power bus to the second electric motor, and a second controller operative to control at least one of the second electric motor inverter and the second generator inverter via a second communication network. The electric drive system further includes a communication link for communication between the first and second controllers. The first electric motor is configured to drive a first traction device of the vehicle, and the second electric motor being configured to drive a second traction device of the vehicle. The first controller includes synchronization logic operative to provide a synchronization signal over the communication link. The second controller includes synchronization logic operative to synchronize the control of the at least one of the second electric motor inverter and the second generator inverter with the control of the at least one of the first electric motor inverter and the first generator inverter by the first controller based on the synchronization signal.

According to yet another embodiment of the present disclosure, a method of controlling an electric drive system of a vehicle is provided. The method includes controlling, by a first controller, a first electric motor operative to drive a first traction device. The first electric motor is connected to the first controller via a first communication network. The method includes providing, by the first controller, a synchronization signal to a second controller via a communication link coupled between the first controller and the second controller. The method further includes synchronizing, by the second controller based on the synchronization signal, control of a second electric motor by the second controller with control of the first electric motor by the first controller. The second electric motor is operative to drive a second traction device and the second electric motor connected to the second controller via a second communication network.

### BRIEF DESCRIPTION OF THE DRAWINGS

The above-mentioned and other features and advantages of this disclosure, and the manner of attaining them, will become more apparent and the disclosure itself will be better understood by reference to the following description of embodiments taken in conjunction with the accompanying drawings, wherein:
FIG. 1 illustrates a vehicle incorporating an electric drive system of the present disclosure according to some embodiments;
FIG. 2 illustrates a representative view of an electric drive system of the present disclosure according to some embodiments including a primary controller and a secondary controller;
FIG. 3 illustrates waveforms representative of a phase locked loop with phase offset of the task execution cycles of the primary and secondary controllers of FIG. 2 according to some embodiments;
FIG. 4 illustrates a startup sequence for synchronizing the primary and secondary controllers of FIG. 2 according to some embodiments;
FIG. 5 illustrates a task execution cycle of the primary controller of FIG. 2 synchronized with a task execution cycle of the secondary controller of FIG. 2 according to some embodiments; and
FIG. 6 illustrates a flow chart of an exemplary method of synchronizing the primary and secondary controllers of FIG. 2.

Corresponding reference characters indicate corresponding parts throughout the several views. The exemplifications set out herein illustrate embodiments of the disclosure, and such exemplifications are not to be construed as limiting the scope of the disclosure in any manner.

### DETAILED DESCRIPTION

The term "logic" or "control logic" as used herein includes software and/or firmware executing on one or more programmable processors, application-specific integrated circuits (ASICs), field-programmable gate arrays (FPGAs), digital signal processors (DSPs), hardwired logic, or combinations thereof. Therefore, in accordance with the embodiments, various logic may be implemented in any appropriate fashion and would remain in accordance with the embodiments herein disclosed.

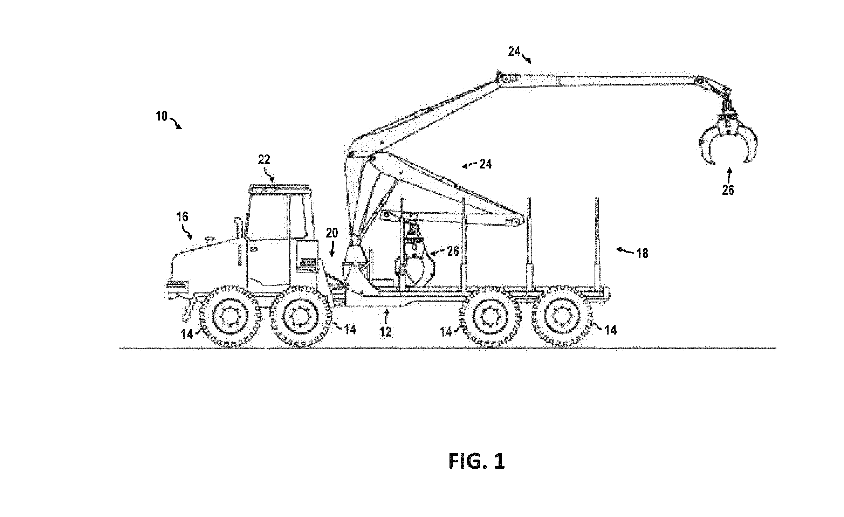

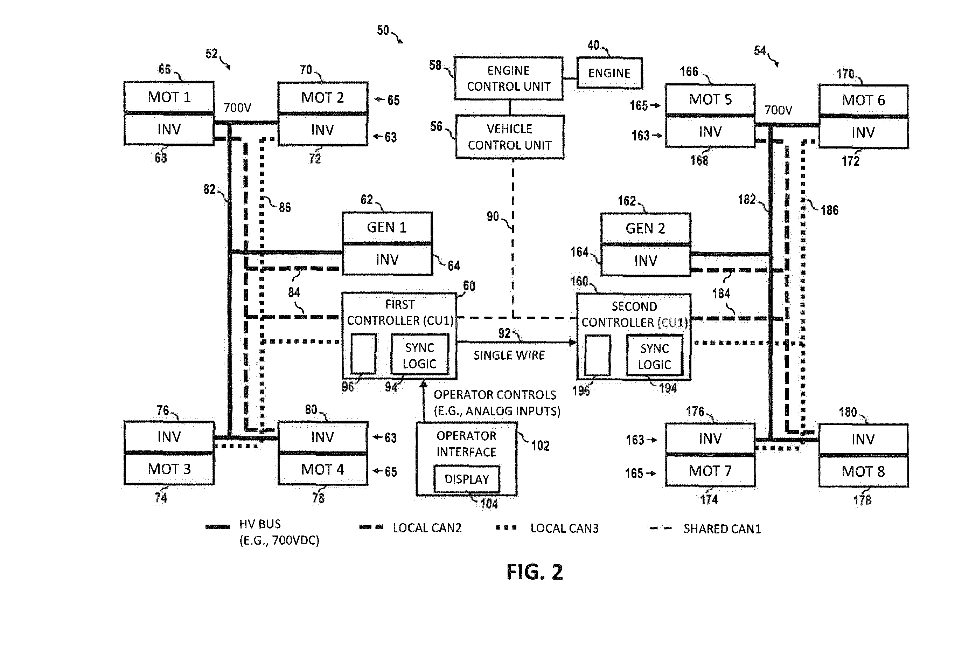

Referring initially to FIG. 1, a vehicle 10 is illustrated that is driven by an electric drive system 50 (FIG. 2) of the present disclosure. Although the vehicle is illustrated and described herein as a forwarder vehicle 10, the vehicle 10 may alternatively include a loader, motor grader, a tractor, a bulldozer, a feller buncher, a crawler, an excavator, a skidder, or another utility vehicle. Further, the electric drive system 50 of the present disclosure may be used with a non-utility vehicle, such as any vehicle including an electric generator and electric motors driving traction devices. Vehicle 10 includes a chassis 12 and a plurality of traction devices 14 supporting the chassis 12. Vehicle 10 illustratively includes a front cab portion 16, a rear loader portion 18, and an articulation joint 20 coupled between portions 16, 18.

Traction devices 14 are driven by electric drive system 50 of FIG. 2 for propelling chassis 12 across the ground 15. In the illustrated embodiment, each traction device 14 is independently driven by a corresponding electric motor. A final drive (e.g., drive axle, gearing, etc.) may be coupled between each electric motor and traction device 14. Vehicle 10 illustratively includes eight traction devices 14, including two right forward traction devices 14 and two left forward traction devices supporting front cab portion 16, and two right rearward traction devices 14 and two left rearward traction devices supporting rear loader portion 18. Vehicle 10 may alternatively include fewer or additional traction devices 14 controlled by electric drive system 50 of the present disclosure. Although the illustrated vehicle 10 includes wheels and tires as traction devices 14, vehicle 10 may include other traction devices, such as steel tracks, rubber tracks, or other suitable ground engaging members.

A hydraulically controlled boom 24 is coupled to rear loader portion 18 and includes a work tool 26 coupled to an end of boom 24. Work tool 26 is illustratively a grapple 26 used for tree felling and logging operations, for example. Other suitable work tools 26 may be provided, including, for example, blades, buckets, pallet forks, bail lifts, augers, harvesters, tillers, and mowers. Boom 24 is configured to move relative to chassis 12 to manipulate and operate work tool 26. An operator controls the functions of vehicle 10, including traction devices 14 and boom 24, from an operator station 22 of front cab portion 16.

Referring to FIG. 2, an electric drive system 50 is illustrated for driving multiple traction devices 14 of vehicle 10 according to some embodiments. Electric drive system 50 includes a first electric drive subsystem 52 including a first controller 60 and a second electric drive subsystem 54 including a second controller 160. Each controller 60, 160 is operative to control multiple electric machines including electric motors and/or generators of the respective electric drive subsystem 52, 54. In the illustrated embodiment, controllers 60, 160 control the electric machines by sending commands to associated electric machine inverters. In one embodiment, first electric drive subsystem 52 controls motors to drive left and right forward traction devices 14 of front cab portion 16, and second electric drive subsystem 54 controls motors to drive left and right rearward traction devices 14 of rear loader portion 18. First and second electric drive subsystems 52, 54 may drive other suitable combinations of traction devices 14 of vehicle 10.

Controllers 60, 160 are operative to synchronize control of the electric machines of the respective electric drive subsystems 52, 54 based on one or more synchronization signals communicated over a communication link 92 coupled between controllers 60, 160, as described herein. In some embodiments, such synchronization increases the likelihood of traction devices 14 being commanded in tandem and improves dynamic torque response at the vehicle level. In some embodiments, control synchronization may improve traction control and reduce wear to the traction devices 14 and/or damage to the terrain (e.g., soil, rock, sand, etc.) traversed by the vehicle 10. For example, with reduced or eliminated phase lag during control, traction device slippage due to commanded electromagnetic torque exceeding ground friction may be detected and other traction devices controlled by a different controller may be controlled to compensate for the detected slippage.

First electric drive subsystem 52 includes a first generator 62 and a plurality of electric motors 66, 70, 74, 78 (collectively motors 65) each operative to drive a respective traction device 14 (FIG. 1) of vehicle 10. An electric power bus 82 stores electrical power generated with electric generator 62 for driving electric motors 65. Motors 65 and generator 62 may be any suitable types of electric machines, including, for example, brushless interior permanent magnet direct current (PMDC), switched reluctance (SR), or any other suitable type. In one embodiment, power bus 82 includes a high voltage, direct current (DC) bus 82 (e.g., 700 VDC) including multiple storage capacitors for storing generated electric power. Generator 62 is coupled to a generator inverter 64, and motors 65 are each coupled to a respective motor inverter 68, 72, 76, 80 (collectively motor inverters 63). Inverters 63, 64 are operative to control the respective generator/motor based on controls from first controller 60. In particular, controller 60 issues propel commands and other controls to motor inverters 63 for driving respective motors 65 with electric power from bus 82, and controller 60 issues power generation commands and other controls to generator inverter 64 to provide a DC voltage level on power bus 82. Inverters 63, 64 also provide feedback such as motor/generator speed data and other suitable electric machine data to first controller 60.

First controller 60 communicates with inverters 63, 64 via one or more communication networks. In the illustrated embodiment, first controller 60 communicates with inverters 64, 68, and 80 via communication network 84 and with inverters 72, 76 via communication network 86, and communication networks 84, 86 are separate and distinct from one another. In some embodiments, multiple communication networks 84, 86 provide additional communication bandwidth and distributed communication load and thus enhance the determinism of the command messages. In some embodiments, faster command response times are provided for devices on first electric drive subsystem 52. Alternatively, a single communication network may be provided for communication between first controller 60 and inverters 63, 64. In one embodiment, communication networks 84, 86 are local controller area networks (CAN), such as J1939 CAN bus with a baud rate of 250 or 500 kilobits/second for example, although other suitable network types may be used. While four electric motors 65 are illustrated with first electric drive subsystem 52 of FIG. 2 for driving four traction devices 14, fewer or additional motors may alternatively be provided. Further, motors 65 may alternatively be configured to each drive multiple traction devices 14 and/or drive axles.

Similarly, second electric drive subsystem 54 includes a second generator 162 and a plurality of electric motors 166, 170, 174, 178 (collectively motors 165) each operative to drive a respective traction device 14 (FIG. 1) of vehicle 10. An electric power bus 182 stores electrical power generated with electric generator 162 for driving electric motors 165. Motors 165 and generator 162 may include any suitable types of electric machines, including, for example, brushless interior permanent magnet direct current (PMDC), switched reluctance (SR), or any other suitable type. In one embodiment, power bus 182 includes a high voltage, DC bus 182 (e.g., 700 VDC) including multiple storage capacitors for storing generated electric power. Generator 162 is coupled to a generator inverter 164 and motors 165 are each coupled to a respective motor inverter 168, 172, 176, 180 (collectively inverters 163) that are operative to control the respective generator/motor based on controls from second controller 160. In particular, controller 160 issues propel commands and other controls to motor inverters 163 for driving respective motors 165 with electric power from bus 182, and controller 160 issues power generation commands and other controls to generator inverter 164 to provide a DC voltage level on power bus 182. Inverters 163, 164 also provide feedback such as motor/generator speed data and other suitable electric machine data to second controller 160.

Second controller 160 communicates with inverters 163, 164 via one or more communication networks. In the illustrated embodiment, second controller 160 communicates with inverters 164, 168, and 180 via communication network 184 and with inverters 172, 176 via communication network 186, and communication networks 184, 186 are separate and distinct from one another. In some embodiments, multiple communication networks 184, 186 provide additional communication bandwidth and distributed communication load and thus enhance the determinism of the command messages. In some embodiments, faster command response times are provided for devices on second electric drive subsystem 54. Alternatively, a single communication network may be provided for communication between second controller 160 and inverters 163, 164. In one embodiment, communication networks 184, 186 are local controller area networks (CAN), such as J1939 CAN bus with a baud rate of 250 or 500 kilobits/second for example, although other suitable network types may be used. While four electric motors 165 are illustrated in second electric drive subsystem 54 of FIG. 2 for driving four traction devices 14, fewer or additional motors may alternatively be provided. Further, motors 165 may alternatively be configured to each drive multiple traction devices 14 and/or drive axles.

In one embodiment, inverters 63, 64, 163, 164 each include power electronics operative to manage the interconnection between power buses 82, 182 and the respective generators 62, 162 and motors 65, 165. For example, inverters 63, 64, 163, 164 each include at least one microprocessor and power semiconductors to monitor and regulate the attached electric machines based on controls communicated from respective controllers 60, 160. In particular, generator inverters 64, 164 include power converters operative to manage and rectify alternating current (AC) power generated by respective generators 62, 162 to provide DC power to respective power buses 82, 182. Generator inverters 64, 164 may include voltage/current sensors to monitor the DC voltage level on respective power buses 82, 182, and inverters 64, 164 maintain the DC voltage at a target level (e.g., 700 VDC). Motor inverters 63, 163 are operative to route power from power buses 82, 182 to the respective motors 65, 165 and may include power converters (e.g,. rectifiers and/or inverters). In one embodiment, motor inverters 63, 163 switch DC power from respective buses 82, 182 onto the different motor phases as a modified DC waveform. In some embodiments, motors 65, 165 are also driven as electric generators for regenerative braking to return electric energy to the supply system, such as to storage capacitors on power bus 82, 182, vehicle batteries, and/or super capacitors. In some embodiments, brake resistors control the over-generation of electric energy by motors 65, 165 to stabilize buses 82, 182. The power converters of inverters 63, 64, 163, 164 each include insulated gate bipolar junction transistors (IGBT) or other suitable power converter technology.

Generators 62, 162 are coupled to and driven by at least one engine 40, or another suitable prime mover(s), of vehicle 10 for generating electrical power routed to power buses 82, 182. In particular, generators 62, 162 are mechanically coupled to engine 40 such that rotation of engine 40 causes corresponding rotation of generators 62, 162. In one embodiment, power from engine 40 is split between the two generators 62, 162, such as described in U.S. Patent Application Publication No. 2011/0048827, entitled "Hybrid Vehicle with Multiple Electric Drive Systems," filed August 25, 2009, the entire disclosure of which is incorporated by reference herein. In one embodiment, generators 62, 162 include three-phase interior-permanent-magnet (IPM) synchronous generators, although other suitable types of generators may be used. Multiple engines 40 may also be used to drive generators 62, 162.

In the illustrated embodiment, communication networks 84, 86 of first electric drive subsystem 52 are separate and distinct from communication networks 184, 186 of second electric drive subsystem 54. Controllers 60, 160 each include at least one processor having internal or external memory accessible by the at least one processor. The at least one processor executes instructions contained in software and/or firmware stored in the memory to perform the functionality of controllers 60, 160 described herein. In one embodiment, controllers 60, 160 each include a real time operating system (RTOS) that implements and manages the task execution cycles for controlling subsystems 52, 54. In one embodiment, controllers 60, 160 are physically separate control units that are communicatively coupled via communication link 92. Alternatively, controllers 60, 160 may each include a microprocessor provided together on an embedded controller, such as on an electronic circuit board for example. In one embodiment, communication link 92 is a single wire or conductor configured to carry a communication signal, although multiple wires/conductors may alternatively be used. In one embodiment, the single wire 92 reduces the likelihood of negatively impacting electromagnetic interference (EMI) of vehicle 10 due to the transmitted signal being low frequency and due to the signal transition rate. In one embodiment, first and second electric drive subsystems 52, 54 further include one or more brake resistors/brake choppers coupled to respective power buses 82, 182 and controlled by generator inverters 64, 164 for dynamic braking wherein electric energy is dissipated from bus 82, 182 in the form of heat.

First and second controllers 60, 160 are each coupled to a vehicle control unit (VCU) 56 via another communication network 90 (e.g., a CAN bus network) for transmitting and receiving vehicle controls and feedback with VCU 56. In one embodiment, controllers 60, 160 control the speed of engine 40 for driving generators 62, 162. Alternatively, vehicle 10 includes an engine control unit (ECU) 58 in communication with VCU 56 and controllers 60, 160 for controlling engine 40. In one embodiment, an engine speed sensor is coupled to engine 40 for detecting the engine output speed and providing the detected engine speed to controllers 60, 160, ECU 58, and/or VCU 56. In one embodiment, VCU 56 is operative to control the state of vehicle 10 and to issue signals to controllers 60, 160 used for motor and generator control. VCU 56 and ECU 58 each include at least one processor and software/firmware stored in memory accessible by the at least one processor.

Vehicle 10 further includes an operator interface 102 coupled to first controller 60 that provides an operator with inputs, feedback, and controls for vehicle 10. For example, operator interface 102 is provided in operator station 22 (FIG. 1) and may include a steering device, a brake, an accelerator pedal, a transmission shifter, and other suitable operator input devices. In the illustrated embodiment, inputs from devices of operator interface 102 are routed only to first controller 60 and first controller 60 provides the operator input data to second controller 160, although inputs from operator interface 102 may also be routed directly to second controller 160. Controllers 60, 160 control inverters 63, 64, 163, 164 based on the operator inputs received from operator interface 102. Operator interface 102 illustratively includes a display 104 that displays various vehicle parameters and diagnostic data such as vehicle speed, ground speed, transmission gear data, temperature data, fault data, and other parameters. In one embodiment, operator interface 102 and display 104 are coupled to VCU 56 for receiving the feedback and display data.

Controllers 60, 160 each control respective electric machines 62, 65, 162, 165 via inverters 63, 64, 163, 164 based on task execution cycles such that a set of propel tasks is executed each cycle for controlling the electric machines. The period of the task execution cycles of controllers 60, 160 may be five to ten milliseconds (ms), for example, or any other suitable period. In the illustrated embodiment, the task execution cycles of the first and second controllers 60, 160 have the same target period and frequency but have a relative phase difference. Tasks executed during each cycle may include propel tasks (e.g., torque commands to motor inverters 63, 163, power generation commands to generator inverters 64, 164, etc.) and other functions performed by controller 60, 160, such as running a cooling fan, issuing control responses to sensor data (e.g., based on temperature of brake resistor or motor), and other suitable tasks.

Controllers 60, 160 include respective synchronization logic 94, 194 operative to synchronize the control of the electric machines of the respective electric drive subsystems 52, 54 based on one or more synchronization signals communicated over communication link 92. In particular, the task execution cycles of each controller 60, 160 are synchronized relative to a target phase offset θ_{TARGET}. In the illustrated embodiment, first controller 60 is configured as the primary controller and initiates the control synchronization by transmitting a synchronization signal to second controller 160, configured as the secondary controller, during one or more iterations of the task execution cycle. In some embodiments, first controller 60 sends a synchronization signal to second controller 160 at startup and at each subsequent iteration of the task execution cycle such that second controller 160 continuously synchronizes control with first controller 60 during operation of vehicle 10. Based on the synchronization signal, synchronization logic 194 of second controller 160 synchronizes the task execution cycles for controlling electric machines on subsystem 54 with the task execution cycles of first controller 60 for controlling the electric machines on subsystem 52. First controller 60 is referred to herein as the primary controller 60, and second controller 160 is referred to herein as the secondary controller 160, although either controller 60, 160 may be configured as primary or secondary.

In the illustrated embodiment, primary controller 60 is operative to generate an electrical pulse as the synchronization signal using controller hardware. Secondary controller 160 stores a timestamp of receipt of the electrical pulse relative to its clock. Secondary controller 160 shortens or lengthens at least one task execution cycle to put the task execution cycles of the secondary controller 160 in lock step (i.e., phase locked loop) with the task execution cycles of the primary controller 60 relative to a target phase offset. The value of the target phase offset is stored in memory of controllers 60, 160 to identify a desired phase difference between task execution cycles of controllers 60, 160. Accordingly, synchronization logic 94, 194 of controllers 60, 160 cooperate to implement a software-based phase locked loop (PLL) of the task execution cycles with a specified target phase offset.

In the illustrated embodiment, each controller 60, 160 includes a programming file 96, 196, such as an end-of-line (EOL) file, stored in memory that identifies various synchronization parameters for configuring controllers 60, 160. Synchronization logic 94, 194 implements the control synchronization based on parameters in the respective EOL file 96, 196. For example, the EOL file 96, 196 identifies the target phase offset and the timing of the electrical pulse in the task cycle and configures the controller 60, 160 as either the primary or secondary controller for synchronization. In one embodiment, synchronization logic 94, 194 includes identical software and/or firmware residing on the controllers 60, 160. For example, synchronization logic 94, 194 of each controller 60, 160 may include a primary software module and a secondary software module. Based on configuration data in the EOL file 96, 196, first controller 60 executes the primary software module to operate as the primary controller 60 and second controller 160 executes the secondary software module to operate as the secondary controller 160.

Secondary controller 160 includes electronics to receive the electrical pulse. The receiving electronics of controller 160 may specify a low input threshold (e.g., less than 2.5 V) to reduce signal propagation time and any parasitic time induced by signal reflections on the wire 92.

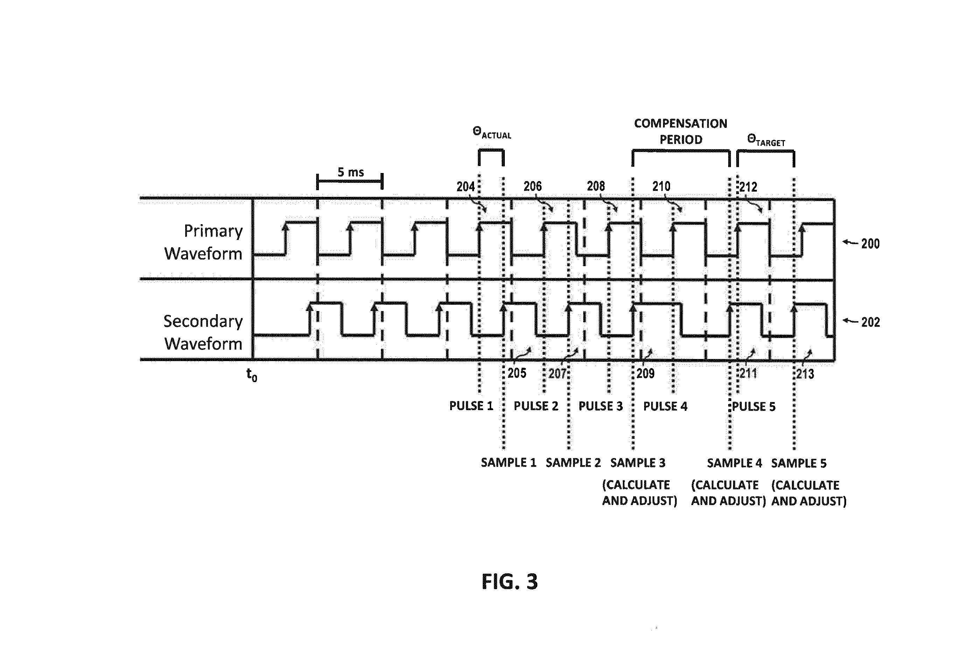

FIG. 3 is a startup sequence of electric drive system 50 according to some embodiments for control synchronization. Upon startup of electric drive system 50, controllers 60, 160 may power up in any order or may require additional startup time due to software or system inconsistencies, thereby requiring synchronization. The control synchronization described herein increases the likelihood that the base task rates are well-aligned and the phase offset corresponds to the desired phase angle required to synchronize the controllers 60, 160.

FIG. 3 illustrates a primary waveform 200 representing the task execution cycles of primary controller 60 and a secondary waveform 202 representing the task execution cycles of secondary controller 160. An illustrative period of each cycle is 5 ms, although other suitable periods may be used. The controllers 60, 160 are turned on at time t₀ and respective timers of each controller 60, 160 are started for controlling the task execution cycles. The initial actual phase offset θ_{ACTUAL} between task execution cycles of controllers 60, 160 after startup is illustrated between the rising edges of a cycle 204 of primary waveform 200 and a cycle 205 of secondary waveform 202.

At the beginning of cycle 204, primary controller 60 generates an electrical pulse (PULSE 1) and transmits the pulse over communication link 92 for receipt by secondary controller 160. At the beginning of cycle 205, secondary controller 160 samples propel data received from primary controller 60 (e.g., over communication network 90) and notes the time of receipt of PULSE 1 relative to its own clock. Primary controller 60 generates additional pulses at the beginning of each subsequent cycle 206, 208, 210, 212 (PULSES 2, 3, 4, 5), and secondary controller 160 notes the timestamp of the receipt of each pulse at the beginning of each respective cycle 207, 209, 211, 213. Synchronization logic 194 of secondary controller 160 illustratively uses cycle 209 as a compensation period to calculate the difference between the actual phase offset θ_{ACTUAL} and a target phase offset θ_{TARGET} based on the timestamps and to adjust (e.g., expand or compress) the task execution cycle to be synchronized with the task execution cycle of controller 60 relative to the target phase offset θ_{TARGET}. As an example, if the task execution cycle of secondary controller 160 runs every 5 ms, cycle 209 may be stretched to run 8.5 ms or another suitable time during the compensation period to achieve θ_{TARGET}. Multiple cycles with period adjustments may be utilized by secondary controller 160 to achieve θ_{TARGET}. In the illustrated embodiment, controllers 60, 160 do not initiate inverter controls until the secondary controller 160 completes the initial compensation period.

Following the adjustment during cycle 209, secondary controller 160 illustratively continually monitors θ_{ACTUAL} each subsequent cycle while executing the inverter controls and adjusts subsequent task execution cycles as necessary to remain in lock step with controller 60 relative to θ_{TARGET}. As such, if the timer at either of controllers 60, 160 has some degree of fluctuation due to timer corruption or other imperfections, and the electrical pulse is not generated exactly on time (e.g., every 5 ms), secondary controller 160 is constantly adjusting to remain in lockstep at the target phase offset θ_{TARGET} despite the period imperfections. In some embodiments, controller 160 is operative to generate diagnostic trouble codes (DTCs) if a continued phase mismatch is detected due to, for example, internal oscillator failure in a controller.

In the illustrated embodiment, the electrical pulse is generated by primary controller 60 at the start of each task execution cycle of primary controller 60, as illustrated with primary waveform 200. In other embodiments, the pulse may be generated at another suitable time during each task execution cycle, provided both controllers 60, 160 are programmed to expect the pulse at a particular time in each cycle.

Data sampled by secondary controller 160 at the beginning of each task execution cycle includes, for example, the torque calculations and power generation calculations performed by primary controller 60, operator input data provided by operator interface 102 (torque commands, brake commands), inverter states (e.g., standby, normal operation, faulted and associated fault code), motor speed feedback, vehicle speed data, and other suitable vehicle parameters.

In one embodiment, the control synchronization at startup is performed prior to operation of the electric machines such that controllers 60, 160 are in the desired lockstep before issuing propel commands. For example, the startup synchronization sequence may be performed within the first 50 ms of starting vehicle and powering on controllers 60, 160. As such, prior to issuing propel commands to electric machines, controllers 60, 160 are synchronized relative to the target phase offset.

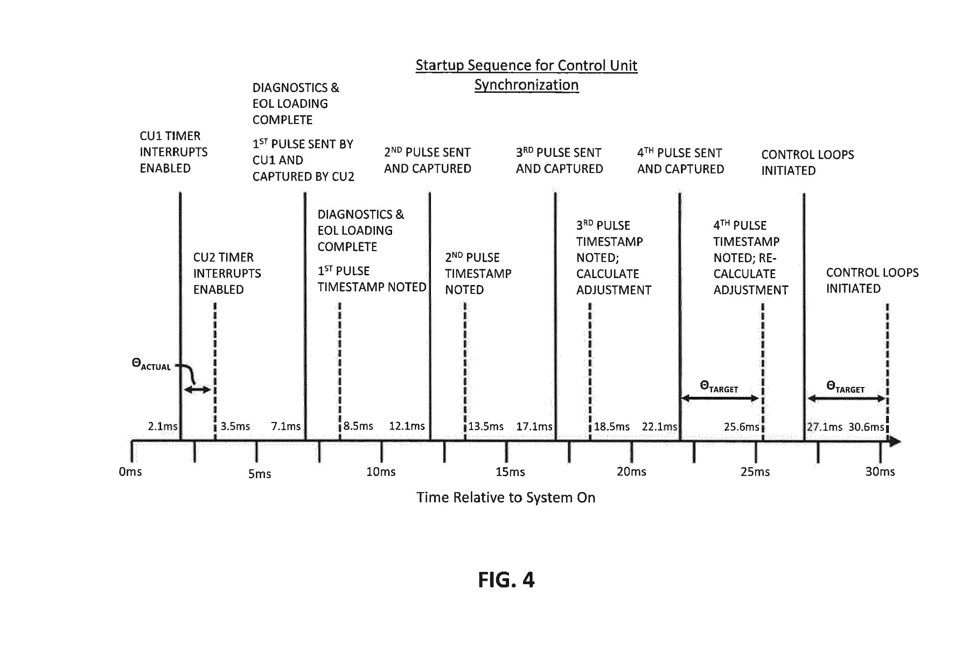

For example, FIG. 4 is another illustration of a startup sequence for control synchronization. The times identified for each event in FIG. 4 and described below are for illustrative purposes, and different systems may have different event times depending on configuration and external events. After turning on electric drive system 50, the timer interrupts are automatically enabled at primary controller (CU1) 60 at 2.1 ms and at secondary controller (CU2) 160 at 3.5 ms to begin the respective task execution cycles, resulting in an initial actual phase offset θ_{ACTUAL} of 1.4 ms. Each solid vertical line in FIG. 4 represents the beginning of a new task execution cycle at primary controller 60, and each dashed vertical line represents the beginning of a new task execution cycle at secondary controller 160. The task period of controllers 60, 160 is illustratively 5 ms.

At 7.1 ms, primary controller 60 has completed initial diagnostics and loading of the EOL file 96 (FIG. 2) for configuration and transmits a first electrical pulse (synchronization signal), and secondary controller 160 captures the pulse. At 8.5 ms, secondary controller 160 has completed initial diagnostics and loading of the EOL file 196 for configuration and notes the timestamp of the receipt of the first electrical pulse. At 12.1 ms, a second pulse is sent by primary controller 60 and captured by secondary controller 160, and secondary controller 160 notes the associated timestamp at 13.5 ms. At 17.1 ms, a third pulse is sent by primary controller 60 and captured by secondary controller 160, and secondary controller 160 notes the timestamp at 18.5 ms and calculates a period adjustment for that task execution cycle. The adjusted cycle is stretched by 2.1 ms to a period of 7.1 ms (i.e., from 18.5 ms to 25.6 ms) to synchronize controllers 60, 160 to the target phase offset θ_{TARGET} of 3.5 ms. At 22.1 ms, a fourth pulse is sent by primary controller 60 and captured by secondary controller 160, and secondary controller 160 notes the timestamp at 25.6 ms and re-calculates a period adjustment for that task execution cycle if necessary. At 27.1 ms, primary controller 60 initiates control loops for executing propel functions to control electric machines of first electric drive subsystem 52. At 30.6 ms, secondary controller 160 initiates its control loops for executing propel functions to control electric machines of second electric drive subsystem 54. For each subsequent pulse sent by primary controller 60, secondary controller 160 monitors the actual phase offset and adjusts the task period as necessary to monitor the target phase offset.

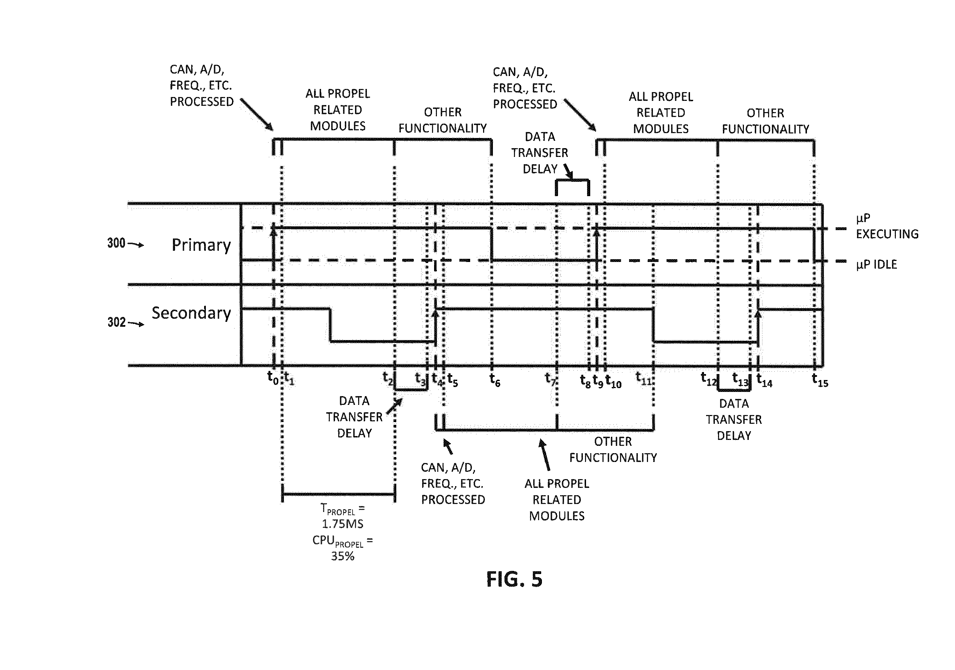

FIG. 5 illustrates task execution cycles synchronized between controllers 60, 160. Referring to FIG. 5, a primary waveform 300 illustrates a task execution cycle of primary controller 60 synchronized with a task execution cycle of secondary controller 160 illustrated with a secondary waveform 302. The task execution cycles of FIG. 5 illustratively have a period of 5 ms and a phase offset of 180 degrees. The task execution cycle of primary controller 60 is between times t₀ and t₉ of primary waveform 300, and a subsequent cycle starts at time t₉. The synchronized task execution cycle of secondary controller 160 is between times t₄ and t₁₄ of secondary waveform 302, and a subsequent cycle starts at time t₁₄. The processor(s) of primary controller 60 executes tasks for a portion of the full task cycle between times t₀ and t₆ and is idle between times t₆ and t₉, and the processor(s) of secondary controller 160 executes tasks for a portion of its full task cycle between times t₄ and t₁₁ and is idle between times t₁₁ and t₁₄.

At the beginning of each execution portion of the task execution cycle (between times t₀ and t₁ for controller 60 and t₄ and t₅ for controller 160), each controller 60, 160 processes low-level tasks for data management and signal conditioning required by the application and operating systems. For example, microcontroller mailboxes are emptied, parameter group numbers/suspect parameter numbers (PGNs/SPNs) of CAN are copied into application variables, analog-to-digital (A/D) conversion is triggered for sampling inputs, input frequencies are calculated and filtered (e.g., transmission speed sensor, etc.), and other suitable tasks.

Following the initial calculations, each executing portion of each task cycle is divided into propel functions and non-propel functions. In the illustrated embodiment, controllers 60, 160 first perform propel tasks before performing the other non-propel functions. Propel functions include calculating torque commands for motor inverters 63, 163, power generation commands for generator inverters 64, 164, and other commands routed to electric machine inverters for propelling vehicle 10. Non-propel functions may include operating system level tasks, such as running a cooling fan, control a brake resistor, issuing control responses based on sensor data (e.g., controls based on temperature, etc.), commanding inverter diagnostics and operating state, actuating brake lights, controlling park brake state, performing internal diagnostics, or controlling other systems and subsystems of vehicle 10.

Primary controller 60 performs propel functions between times t₁ and t₂ before performing non-propel functions between times t₂ and t₆. Similarly, secondary controller 160 performs propel functions between times t₅ and t₇ before performing non-propel functions between times t₇ and t₁₁. Illustratively, each controller 60, 160 allocates 1.75 ms (T_{PROPEL}) or 35% (CPU_{PROPEL}) of the task execution cycle for propel calculations, although other propel task allocations may be implemented.

In the illustrated embodiment, secondary controller 160 automatically acquires the propel data calculated by primary controller 60 prior to performing its propel calculations each cycle. Primary controller 60 routes the propel calculation data to secondary controller 160 (or secondary controller 160 retrieves the data) over communication network 90 immediately after the propel functions have been executed at primary controller 60 each cycle, as illustrated with the data transfer delay between times t₂ and t₃. The propel calculation data may be routed to secondary controller 160 while primary controller 60 performs the non-propel functions. Secondary controller 160 uses the propel calculation data to execute its propel tasks and perform propel calculations. As one example, the propel calculation data includes up to 16 bytes of wheel speed data, operator commands, torque and power generation command calculations, etc., and this data is communicated over network 90 using standard or extended identifier messages. In one embodiment, the communication between controllers 60, 160 over network 90 is set at highest message priority (e.g., CAN) to ensure bus arbitration succeeds over lower priority messages, thereby providing deterministic data transfer relative to the base task rate in terms of data transmission start and end times.

In the illustrated embodiment, the target phase offset is set based on the time required for primary controller 60 to perform the propel calculations and for this propel calculation data to be routed to or retrieved by secondary controller 160. The data transfer delay illustrated between times t₂ and t₃ allows for the propel calculation data to be transferred to secondary controller 160 over communication network 90. As such, in some embodiments a minimum target phase offset is based on the time between t₀ and t₃ required for controller 60 to perform propel calculations and for the propel calculation data to be received by secondary controller 160. FIG. 5 illustrates the task execution cycle of secondary controller 160 starting at time t₄ shortly after time t3. In some embodiments, the time between t₃ and t₄ is the maximum amount of time that secondary controller 160 can compress the actual phase offset during control synchronization. In some embodiments, the time between t₃ and t₄ further allows for CAN messages that were dropped (e.g., due to wire harness damage, EMI, etc.) to be retransmitted.

In the illustrated embodiment, primary controller 60 also receives propel calculation data from secondary controller 160 over network 90 following execution of the propel functions by secondary controller 160 (i.e., during data transfer delay between times t₇ and t₈). Primary controller 60 may use this data to execute propel tasks during the subsequent task execution cycle. In the illustrated embodiment, controllers 60, 160 do not receive the non-propel data calculated by the other controller 60, 160, although this data may also be shared between controllers 60, 160.

Other phase offsets different than 180 degrees may be implemented. For example, a greater phase offset (i.e., greater than 180 degrees) provides additional processing time at primary controller 60 for propel functions depending on the required processing load. A greater phase offset also increases the delay before secondary controller 160 initiates its task execution cycle.

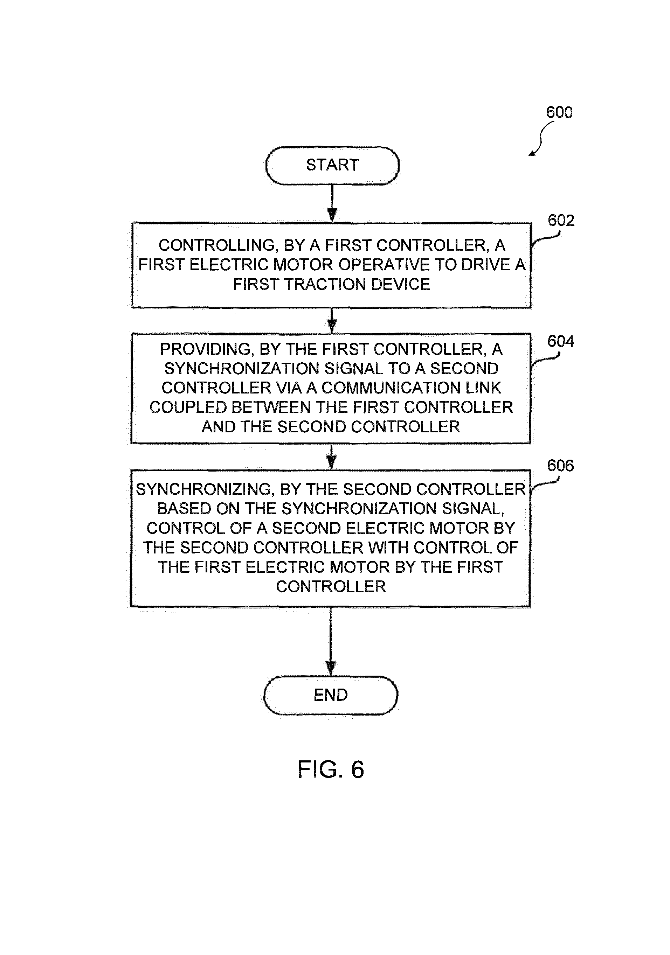

Referring to FIG. 6, a flow diagram 600 of an exemplary method performed by electric drive system 50 is illustrated for synchronizing control of the electric machines of electric drive subsystems 52, 54 of FIG. 2. Reference is made to FIGS. 1 and 2 throughout the description of FIG. 6. At block 602, first controller 60 controls a first electric motor (e.g., motor 66, 70, 74, 78) operative to drive a first traction device 14. As described herein, the first electric motor is connected to first controller 60 via a first communication network, such as network 84 or 86. At block 604, first controller 60 provides a synchronization signal to second controller 160 via communication link 92 coupled between first controller 60 and second controller 160. In one embodiment, first controller 60 transmits the synchronization signal to second controller 160 over communication link 92 based on a task execution cycle of first controller 60, as described herein. In one embodiment, first controller 60 transmits the synchronization signal to second controller 160 in response to each of a plurality of iterations of the task execution cycle of first controller 60.

At block 606, second controller 160 synchronizes, based on the synchronization signal, control of a second electric motor (e.g., motor 166, 170, 175, 178) by second controller 160 with control of the first electric motor by first controller 60. The second electric motor is operative to drive a second traction device 14 and is connected to second controller 160 via a second communication network, such as network 184 or 186. In one embodiment, second controller 160 synchronizes the control of the second electric motor by second controller 160 with the control of the first electric motor by first controller 60 by synchronizing the task execution cycle of second controller 160 to the task execution cycle of first controller 60 relative to a target phase offset, as described herein. In one embodiment, the synchronization signal includes at least one electrical pulse associated with the task execution cycle of first controller 60, and second controller 160 adjusts its task execution cycle based on a receipt of the at least one electrical pulse from first controller 60, as described herein.

The disclosed operations set forth herein may be carried out by one or more suitable processors that are in communication with a non-transitory computer readable medium such as but not limited to CDROM, RAM, other forms of ROM, hard drives, distributed memory, etc. The non-transitory computer readable medium of each controller 60, 160 stores executable instructions that when executed by the one or more processors cause the one or more processors to perform, for example, the operations of respective synchronization logic 94 and/or synchronization logic 194 described herein and/or the methods described herein.

In some embodiments, the electric drive system 50 of the present disclosure provides for the reuse of existing control unit hardware (e.g., microprocessors, drivers, input filters, etc.) and communication bus technologies of existing vehicles to accomplish high performance and advanced control of multiple electric machines.

While the embodiments have been described as having exemplary designs, the disclosed embodiments can be further modified within the spirit and scope of this disclosure. This application is therefore intended to cover any variations, uses, or adaptations of the embodiments using its general principles. Further, this application is intended to cover such departures from the present disclosure as come within known or customary practice in the art to which this disclosure pertains and which fall within the limits of the appended claims.

## Claims

1. A vehicle including:
a chassis;
a plurality of traction devices configured to support the chassis;
a plurality of electric motors, each electric motor being operative to drive a traction device;
a first communication network and a second communication network;
a first controller configured to control a first electric motor of the plurality of electric motors, the first controller and the first electric motor being coupled to the first communication network;
a second controller configured to control a second electric motor of the plurality of electric motors, the second controller and the second electric motor being coupled to the second communication network; and
a communication link electrically coupled between the first controller and the second controller, the second controller being operative to synchronize control of the second electric motor by the second controller with control of the first electric motor by the first controller based on a synchronization signal provided by the first controller over the communication link.

2. The vehicle of claim 1, wherein the second controller synchronizes the control of the second electric motor by the second controller with the control of the first electric motor by the first controller by synchronizing a task execution cycle of the second controller to a task execution cycle of the first controller relative to a target phase offset.

3. The vehicle of claim 2, wherein the synchronization signal includes at least one electrical pulse associated with the task execution cycle of the first controller, and the second controller adjusts the task execution cycle of the second controller based on a receipt of the at least one electrical pulse from the first controller.

4. The vehicle of claim 1, 2 or 3 wherein the first controller is operative to transmit the synchronization signal to the second controller over the communication link based on a task execution cycle of the first controller.

5. The vehicle of claim 4, wherein the first controller transmits the synchronization signal to the second controller in response to each of a plurality of iterations of the task execution cycle of the first controller.

6. The vehicle of any preceding claim, wherein the second controller synchronizes the control of the second electric motor by the second controller with the control of the first electric motor by the first controller relative to a target phase offset, and the target phase offset is based on a time required for the first controller to execute a set of tasks during a task execution cycle for controlling at least the first electric motor.

7. The vehicle of any preceding claim, further including a first inverter coupled to the first electric motor and to a first direct current (DC) bus and a second inverter coupled to the second electric motor and to a second direct current (DC) bus, the first controller controlling the first electric motor by issuing commands to the first inverter over the first communication network, and the second controller controlling the second electric motor by issuing commands to the second inverter over the second communication network.

8. The vehicle of any preceding claim, further including a first electric generator coupled to the first communication network for generating power provided to a first DC bus and a second electric generator coupled to the second communication network for generating power provided to a second DC bus, the first electric motor being coupled to the first DC bus and the second electric motor being coupled to the second DC bus.

9. The vehicle of claim 8, further including a third electric motor coupled to the first communication network and the first DC bus and a fourth electric motor coupled to the second communication network and the second DC bus, the first controller being operative to control the first and third electric motors and the first electric generator via the first communication network, and the second controller being operative to control the second and fourth electric motors and the second electric generator via the second communication network, the second controller synchronizing control of the second and fourth electric motors and the second electric generator by the second controller with control of the first and third electric motors and the first electric generator by the first controller based on the synchronization signal.

10. The vehicle of claim 9, wherein the first electric motor, the second electric motor, the third electric motor, and the fourth electric motor each drive a different traction device of the vehicle.

11. The vehicle of any preceding claim, wherein the first and second controllers each include a microprocessor provided on an embedded controller.

12. The vehicle of any preceding claim, wherein the first and second controllers are physically separate from each other, and the communication link includes a communication wire coupled between the first and second controllers for communication of the synchronization signal from the first controller to the second controller.

13. An electric drive system for a vehicle including:
a first electric drive subsystem including a first power bus, a first generator, a first generator inverter operative to transfer power generated by the first generator to the first power bus, a first electric motor, a first electric motor inverter configured to transfer power from the first power bus to the first electric motor, and a first controller operative to control the first electric motor inverter and the first generator inverter via a first communication network;
a second electric drive subsystem including a second power bus, a second generator, a second generator inverter operative to transfer power generated by the second generator to the second power bus, a second electric motor, a second electric motor inverter configured to transfer power from the second power bus to the second electric motor, and a second controller operative to control the second electric motor inverter and the second generator inverter via a second communication network; and
a communication link for communication between the first and second controllers, the first electric motor being configured to drive a first traction device of the vehicle, and the second electric motor being configured to drive a second traction device of the vehicle, the first controller operative to provide a synchronization signal over the communication link, the second controller operative to synchronize the control of the second electric motor inverter and the second generator inverter with the control of the first electric motor inverter and the first generator inverter by the first controller based on the synchronization signal.

14. The electric drive system of claim 13, wherein the second controller synchronizes the control of the second electric motor inverter and the second generator inverter with the control of the first electric motor inverter and the first generator inverter by the first controller by synchronizing a task execution cycle of the second controller to a task execution cycle of the first controller relative to a target phase offset.

15. A method of controlling an electric drive system of a vehicle, the method comprising:
controlling, by a first controller, a first electric motor operative to drive a first traction device, the first electric motor connected to the first controller via a first communication network;
providing, by the first controller, a synchronization signal to a second controller via a communication link coupled between the first controller and the second controller; and
synchronizing, by the second controller based on the synchronization signal, control of a second electric motor by the second controller with control of the first electric motor by the first controller, the second electric motor operative to drive a second traction device and the second electric motor connected to the second controller via a second communication network.

16. The method of claim 15, wherein the second controller synchronizes the control of the second electric motor by the second controller with the control of the first electric motor by the first controller by synchronizing a task execution cycle of the second controller to a task execution cycle of the first controller relative to a target phase offset.

17. The method of claim 16, wherein the synchronization signal includes at least one electrical pulse associated with the task execution cycle of the first controller, and the second controller adjusts the task execution cycle of the second controller based on a receipt of the at least one electrical pulse from the first controller.

18. The method of claim 15 or 16, wherein the first controller transmits the synchronization signal to the second controller over the communication link based on a task execution cycle of the first controller.

19. The method of claim 18, wherein the first controller transmits the synchronization signal to the second controller in response to each of a plurality of iterations of the task execution cycle of the first controller.

20. The method of claim 15, wherein the second controller synchronizes the control of the second electric motor by the second controller with the control of the first electric motor by the first controller relative to a target phase offset, and the target phase offset is based on a time required for the first controller to execute a set of tasks during a task execution cycle for controlling at least the first electric motor.
